# EUROPÄISCHE PATENTSCHRIFT

(11) **EP 3 395 041 B1**
(45) Veröffentlichungstag und Bekanntmachung des Hinweises auf die Patenterteilung: **20.10.2021**
(21) Anmeldenummer: 16826720.1
(22) Anmeldetag: 20.12.2016
(51) Int. Cl.: H04L 29/06, H04L 29/12

(54) **NETZWERK MIT TEILWEISER UNIDIREKTIONALER DATENÜBERTRAGUNG**
NETWORK WITH PARTIAL UNIDIRECTIONAL DATA TRANSMISSION
RÉSEAU À TRANSMISSION DE DONNÉES UNIDIRECTIONNELLE PARTIELLE

(30) Priorität: 22.12.2015 DE 102015016609
(43) Veröffentlichungstag der Anmeldung: 31.10.2018
(73) Patentinhaber: Hirschmann Automation and Control GmbH, 72654 Neckartenzlingen (DE); Thales Management & Services Deutschland GmbH, 71254 Ditzingen (DE)
(72) Erfinder: GORZELLIK, Dietrich, 72793 Pfullingen (DE); KLIPPEL, Dieter, 72793 Pfullingen (DE); SCHILLING, Johannes, 72810 Gomaringen (DE); SOMMER, Rolf-Dieter, 73760 Ostfildern (DE); KRAFT, Hans, 74360 Ilsfeld (DE); BAUER, Harald, 71522 Backnang (DE)
(74) Vertreter: Greif, Thomas
(86) Internationale Anmeldenummer: PCT/EP2016/081963
(87) Internationale Veröffentlichungsnummer: WO 2017/108816

(56) Entgegenhaltungen:
- US-A1- 2002 016 826
- US-A1- 2015 358 279
- US-B1- 8 139 572

## Beschreibung

Die Erfindung betrifft ein Verfahren zum Betreiben eines Netzwerkes sowie eine Vorrichtung zur Durchführung eines solchen Verfahrens gemäß den Merkmalen des jeweiligen Oberbegriffes der unabhängigen Patentansprüche.

Grundsätzlich ist es bekannt, dass in Netzwerken Netzwerkgeräte miteinander verbunden sind und untereinander Daten austauschen.

Darüber hinaus gibt es Netzwerke, die in zumindest zwei voneinander zu trennende Netzwerke aufgeteilt sind, wobei nicht nur Daten zwischen Netzwerkgeräten innerhalb eines jeweiligen Netzwerkes ausgetauscht werden, sondern auch Daten von Netzwerkgeräten des einen Netzwerkes in das andere Netzwerk zu den dortigen Netzwerkgeräten übertragen werden, und umgekehrt.

Solange die zumindest beiden Netzwerke (Netzwerksegmente) gleichwertig sind, bestehen keine Bedenken, die Daten von dem einen Netzwerk in das zumindest eine andere Netzwerk und umgekehrt zu übertragen. Allerdings gibt es Anwendungen beim Betrieb von Netzwerken, bei denen Daten von dem einen in das weitere Netzwerk übertragen werden dürfen, jedoch nicht umgekehrt. Diesbezüglich wird beispielhaft auf die Beschreibungseinleitung der DE 10 2012 208 290 A1 verwiesen.

Zur Verhinderung, dass Daten von dem einen in das weitere Netzwerk übertragen werden können, werden sogenannte Datendioden eingesetzt.

Verfahren zum Betreiben solcher Netzwerke sowie entsprechende Vorrichtungen sind beispielsweise aus der DE 10 2013 218 373 A1 oder DE 10 2013 226 171 A1 bekannt.

Bei der DE 10 2013 218 373 A1 werden zum Austausch von Daten zwischen einer ersten Security-Zone (erstes Netzwerk) und einer zweiten Security-Zone (weiteres Netzwerk) die Verfahrensschritte ausgeführt:
- Empfangen von Daten von der ersten Security-Zone an einer Eingabestufe eines Gateways (Übertragungseinheit),
- Durchführung eines Prozesses, welcher unterschiedliche erforderliche Prüfungen der Daten umfasst,
- wobei eine Abarbeitung jeder der erforderlichen Prüfungen jeweils durch eine kryptographische Schutzmaßnahme gewährleistet wird, indem mithilfe der kryptographischen Schutzmaßnahmen sichergestellt wird, dass eine Ausgabestufe des Gateways die Daten oder aus den Daten abgeleitete Daten nicht für die zweite Security-Zone lesbar bereitstellt, wenn mindestens eine der erforderlichen Prüfungen nicht durchgeführt worden ist.

Ein solches Verfahren ist zum einen in der Hinsicht von Nachteil, dass aufgrund der kryptographischen Schutzmaßnahmen die Zeit für die Übertragung der Daten zwischen der ersten in die zweite Zone verzögert wird. Diese Verzögerungen sind in der Praxis nicht hinnehmbar. Zum anderen wird trotzdem zugelassen, dass Daten von der einen in die andere Zone übertragen werden, obwohl dies aus Sicherheitsgründen nicht gewollt ist. Damit besteht bei diesem bekannten Verfahren die Gefahr, dass die zwar übertragenen, aber kryptographisch verschlüsselten Daten trotzdem in der anderen Zone ankommen, obwohl sie dort nicht ankommen dürfen. Sind sie dort angekommen, besteht weiterhin die Gefahr, dass aufgrund entsprechender Entschlüsselungsmaßnahmen wieder lesbar gemacht werden. Dies stellt ein nicht hinzunehmendes Sicherheitsrisiko dar.

Die DE 10 2013 226 171 A1 betrifft ein Verfahren und eine Vorrichtung zur Übertragung von Daten von einem Sender in einem ersten Kommunikationsnetz zu einem Empfänger in einem zweiten sicherheitskritischen Kommunikationsnetz, wobei eine Eingangspuffereinheit, eine Ausgangspuffereinheit, eine Warteeinheit und eine Prüfeinheit vorgesehen sind. Die Eingangspuffereinheit ist derart ausgebildet, die zu übertragenden Daten bereitzustellen. Die Warteeinheit ist derart ausgebildet, einen Eingangszeitpunkt der zu übertragenen Daten zu erfassen und eine Verweildauer in Abhängigkeit von Informationen zu den zu übertragenen Daten zu ermitteln und die zu übertragenden Daten und/oder einen Kontrollwert der zu übertragenen Daten zu speichern. Die Prüfeinheit ist derart ausgebildet, die zu übertragenden Daten nach Ablauf der Verweildauer mit einem nach Ablauf der Verweildauer aktuellen Prüfmuster zu prüfen, wobei die Ausgangspuffereinheit derart ausgebildet ist, dass sie die Daten für den Empfänger bereitstellt, wenn die Daten bei der Überprüfung als unbedenklich erachtet wurden. Diese Kette der Signalverarbeitung führt zu einer nachteiligen Erhöhung der Übertragungszeit der Daten von dem einen Netzwerk zu dem weiteren Netzwerk. Auch unter sicherheitskritischen Aspekten ist diese Erhöhung der Übertragungszeit bei Anwendung von modernen Netzwerken nicht mehr hinnehmbar.

Der Erfindung liegt daher die Aufgabe zugrunde, ein Verfahren zum Betreiben eines Netzwerkes sowie eine Vorrichtung zur Durchführung eines solchen Verfahrens bereitzustellen, mit dem die eingangs geschilderten Nachteile vermieden werden. Insbesondere soll sichergestellt werden, dass unter sicherheitskritischen Aspekten die Datenübertragung von dem einen Netzwerk in das andere Netzwerk möglich ist, aber umgekehrt nicht, wobei gleichzeitig die Datenübertragung nicht verzögert werden soll und eine Vorrichtung zur Durchführung des Verfahrens einfach aufgebaut und in der Praxis einfach handhabbar ist.

Diese Aufgabe ist durch die Merkmale der beiden Patentansprüche gelöst.

Erfindungsgemäß ist hinsichtlich des Verfahrens vorgesehen, dass die Übertragungseinheit eine Übertragung von Daten nur von dem inneren Netzwerk zu dem äußeren Netzwerk zulässt und das zumindest eine Netzwerkgerät aus dem inneren Netzwerk Daten mit einer ersten Adresse an die Übertragungseinheit sendet, wobei die Übertragungseinheit diese erste Adresse in eine zweite Adresse umwandelt und danach die Daten mit dieser zweiten Adresse in Richtung des äußeren Netzwerkes übertragen werden, wobei die zweite Adresse eine Zieladresse für das zumindest eine Netzwerkgerät in dem äußeren Netzwerk ist. Damit ist zunächst in vorteilhafter Weise sichergestellt, dass eine Datenübertragung rein physikalisch nur in eine Richtung möglich ist. Eine Übertragung in die Gegenrichtung wird damit wirksam verhindert. Damit ist es allerdings auch nicht möglich, dass dem inneren Netzwerk, insbesondere dessen Netzwerkgerät, bekannt ist, an welche Zieladresse es seine Daten an das äußere Netzwerk, insbesondere ein dort vorhandenes Netzwerkgerät schicken soll. Zu diesem Zweck erfolgt eine Verknüpfung der Daten, die das Netzwerkgerät des inneren Netzwerkes übertragen will, mit einer zweiten Adresse innerhalb der Übertragungseinheit, sodass mittels der Übertragungseinheit die Daten des Netzwerkgerätes des inneren Netzwerkes an die Zieladresse in dem äußeren Netzwerk geschickt werden können. Zu diesem Zweck ist vorgesehen, dass die Übertragungseinheit die erste Adresse des Netzwerkgerätes aus dem inneren Netzwerk in eine zweite Adresse umwandelt (umsetzt oder Dergleichen), wobei diese zweite Adresse die Zieladresse für zumindest ein Netzwerkgerät, ggf. aber auch mehrere Netzwerkgeräte, in dem äußeren Netzwerk ist.

Es ist denkbar, dass das Netzwerkgerät in dem inneren Netzwerk eine feste erste Adresse den zu übertragenden Daten zuordnet. Dann erfolgt in der Übertragungseinheit die Zuordnung dieser ersten Adresse zu der zweiten Adresse (der Zieladresse), die ebenfalls fest oder veränderbar sein kann.

Zur Erzielung einer höheren Flexibilität bei der Durchführung des erfindungsgemäßen Verfahrens ist In Weiterbildung der Erfindung vorgesehen, dass das zumindest eine Netzwerkgerät des inneren Netzwerkes eine Anfrage an die Übertragungseinheit sendet, dass Daten gesendet werden sollen, und dass die Übertragungseinheit daraufhin die erste Adresse an das Netzwerkgerät übermittelt. Damit ist es nicht erforderlich, dem zumindest einen Netzwerkgerät eine feste Adresse zuzuordnen, mit der die Daten übertragen werden sollen, sondern die Adresse, mit der die Daten übertragen werden sollen, kann von der Übertragungseinheit vorgegeben werden. Dies hat insbesondere im Falle von Änderungen den Vorteil, dass nicht jedes Netzwerkgerät neu konfiguriert oder umkonfiguriert werden muss, sondern dass eine solche Änderung oder neue Einrichtung der Konfiguration nur innerhalb der Übertragungseinheit erfolgen muss. Nachdem die Anfrage des zumindest einen Netzwerkgerätes aus dem inneren Netzwerk durch die Übertragungseinheit dahingehend erfolgt ist, dass die Übertragungseinheit dem zumindest einen Netzwerkgerät eine Adresse übermittelt hat, kann das zumindest eine Netzwerkgerät aus dem inneren Netzwerk Daten mit dieser Adresse an die Übertragungseinheit senden. Nachdem dies erfolgt ist, wird, wie schon beschrieben, von der Übertragungseinheit diese erste Adresse in eine zweite Adresse umgewandelt und danach die Daten mit dieser zweiten Adresse in Richtung des äußeren Netzwerkes übertragen. Auf diese Art und Weise kann dann, wenn die zweite Adresse eine schon in der Übertragungseinheit bekannte Zieladresse ist, die Datenübertragung direkt erfolgen.

Zur weiteren Erhöhung der Flexibilität bei der Durchführung des Verfahrens ist weiterhin erfindungsgemäß vorgesehen, dass das zumindest eine Netzwerkgerät des äußeren Netzwerkes seine Adresse an die Übertragungseinheit übermittelt. Dies kann ebenfalls dadurch erfolgen, dass das zumindest eine Netzwerkgerät des äußeren Netzwerkes eine Anfrage an die Übertragungseinheit sendet, dass Daten empfangen werden sollen, und dass die Übertragungseinheit daraufhin diese zweite Adresse verwendet, um die Daten, die mit der ersten Adresse empfangen worden sind, an das anfragende Ziel-Netzwerkgerät weiterzuleiten. Hierzu wird dann, wie ebenfalls schon beschrieben, die erste Adresse in die zweite Adresse und damit die Zieladresse umgewandelt. Diese Vorgehensweise hat den Vorteil, dass die Übertragungseinheit auf der Seite des inneren Netzwerkes die erste Adresse vorgeben kann und auf der Seite des äußeren Netzwerkes die insbesondere fest konfigurierten Zieladressen mitgeteilt bekommt oder alternativ abfragt.

Weiterhin ist nach der Erfindung eine Vorrichtung zur Durchführung des erfindungsgemäßen Verfahrens bereitgestellt, wobei erfindungsgemäß vorgesehen ist, dass die Übertragungseinheit dazu eingerichtet ist, dass die Daten mit der ersten Adresse aus dem inneren Netzwerk von einem ersten Router der Übertragungseinheit empfangen werden, und dass Daten mit der zweiten Adresse an das äußere Netzwerk von einem zweiten Router der Übertragungseinheit gesendet werden, wobei Daten zwischen den Routern nur in einer Richtung übertragen werden und die Übertragungseinheit weiterhin dazu eingerichtet ist, die erste Adresse in die zweite Adresse umzusetzen. Eine solche Übertragungseinheit hat den wesentlichen Vorteil, dass sie als Einheit zwischen die beiden Netzwerke (inneres und äußeres Netzwerk) zwischengeschaltet werden kann und mit ihr sowohl durch die Hardware (Datenübertragung in nur einer Richtung, beispielsweise ausgebildet als Datendiode) und Konfiguration keinerlei Änderungen weder an der Hardware noch an der Konfiguration sowohl des inneren als auch des äußeren Netzwerkes erforderlich sind. Das bedeutet, dass die inneren und äußeren Netzwerke in üblicher Weise konfiguriert und betrieben werden können. Grundsätzlich ist zunächst bei einer solcher Konfiguration ein bidirektionaler Datenaustausch zwischen innerem und äußerem Netzwerk gegeben. Soll jedoch sichergestellt werden, dass die Daten nur von dem inneren zu dem äußeren Netzwerk übertragen werden können, wird die Übertragungseinheit zwischen die beiden Netzwerke geschaltet, sodass es aufgrund ihrer Konfiguration und physikalischen Realisierung sichergestellt ist, dass nur noch Daten von dem inneren in das äußere Netzwerk (aber nicht umgekehrt) übertragen werden können. Finden Änderungen in der Konfiguration in dem inneren und / oder äußeren Netzwerk statt, kann eine entsprechende Anpassung der Konfiguration der Übertragungseinheit erfolgen. Von wesentlicherer Bedeutung ist jedoch, dass auch Konfigurationen der Übertragungseinheit geändert werden können, ohne dass eine Änderung der Konfiguration des inneren und / oder äußeren Netzwerkes erforderlich ist.

Zur Realisierung einer solchen Vorrichtung ist In Weiterbildung der Erfindung vorgesehen, dass die beiden Router in einem Gerät integriert sind. Diese beiden Router sind auf geeignete Weise zwecks unidirektionaler Datenübertragung miteinander verbunden, wozu entsprechende Mittel vorgesehen sind. Diese können beispielsweise als Kabel, Leiterbahn oder dergleichen ausgebildet sein und in ihrem Verlauf einen Leitungstreiber aufweisen, mit dem die Datenübertragung in nur einer Richtung realisiert wird. Von ganz besonderem Vorteil ist es, wenn die Übertragungseinheit als eigeständiges Gerät ausgebildet ist, in dem die beiden Router integriert sind, wobei zwischen diesen beiden Routern eine Datenübertragung nur ein einer Richtung möglich ist. Diese unidirektionale Datenübertragung stellt sicher, dass zwar Daten von dem inneren (sicherheitskritischen) Netzwerk in das äußere (sicherheitsunkritische) Netzwerk übertragen werden können, jedoch nicht umgekehrt. Außerdem lässt sich diese Übertragungseinheit universell als Gerät zur Verbindung zwischen den beiden Netzwerken einsetzen und vor allen Dingen lassen sich bekannte Netzwerke, die übliche Übertragungsprotokolle, insbesondere Standardprotokolle wie beispielsweise UDP (User Datagram Protocol), verwenden, ohne weiteres anwenden. Es kann, muss aber nicht vorkommen, dass bestimmte Protokolle (wie beispielsweise FTP (File Transfer Protocol)) nicht zur Anwendung kommen können.

Das vorstehend beschriebene Verfahren, welches in den Verfahrensansprüchen definiert ist, wird im Folgenden näher unter Bezugnahme auf ein Ausführungsbeispiel einer Vorrichtung zur Durchführung dieses Verfahrens beschrieben und näher erläutert.

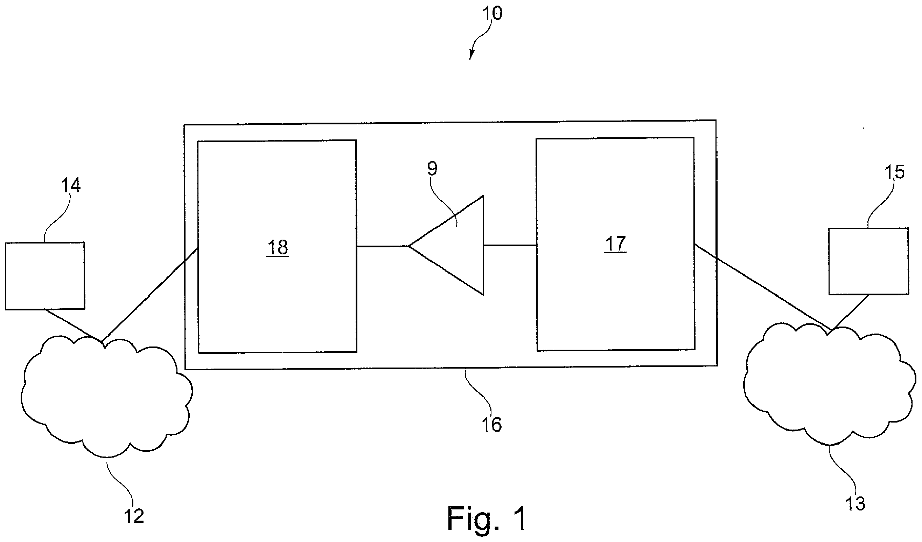

Figur 1 zeigt den prinzipiellen Aufbau eines Netzwerkes 10, bei dem schematisch zumindest ein äußeres (sicherheitsunkritisches) Netzwerk 12 und ebenfalls schematisch zumindest ein inneres (sicherheitskritisches) Netzwerk 13 dargestellt ist. Symbolisch ist für das äußere Netzwerk 12 zumindest ein Netzwerkgerät 14 (zum Beispiel ein Datenlogger) und für das innere Netzwerk 13 zumindest ein Netzwerkgerät 15 (zum Beispiel eine Datenquelle) dargestellt.

Die beiden Netzwerke 12, 13 (bzw. gegebenenfalls weitere Netzwerke bzw. Netzwerkgeräte) sind an einer Übertragungseinheit 16 angeschlossen. Diese Übertragungseinheit 16 weist einen ersten Router 17 sowie einen weiteren Router 18 auf, wobei in diesem Ausführungsbeispiel das äußere Netzwerk 12 an dem Router 18 und das innere Netzwerk 13 an dem Router 17 über entsprechende Verkabelung und Schnittstellen angeschlossen ist. Die beiden Router 17, 18 sind zwecks Datenübertragung in unidirektionaler Richtung miteinander verbunden, wobei die unidirektionale Datenübertragung symbolisch durch eine Datendiode 9 dargestellt ist.

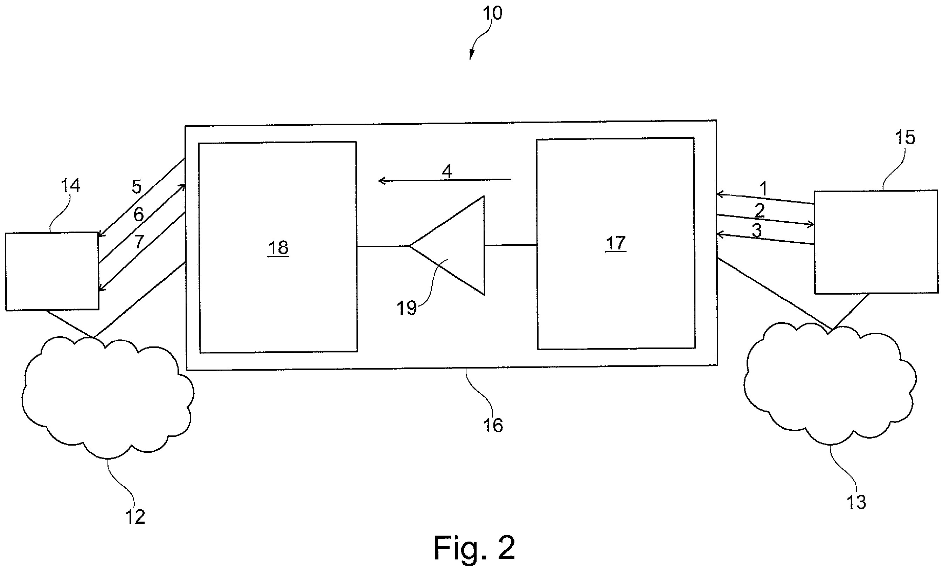

Anhand der Figur 2 wird das erfindungsgemäße Verfahren auf Basis der Hardware, die in Figur 1 gezeigt ist, im Folgenden noch einmal anhand von Beispielwerten näher erläutert.

In zwei Schritten (1 und 2) sendet das Netzwerkgerät 15 eine erste Anfrage (Schritt 1) an die Übertragungseinheit 16, woraufhin die Übertragungseinheit 16 dem Netzwerkgerät 15 die erste Adresse übermittelt (Schritt 2). Damit "lernt" das Netzwerkgerät 15, an welche Adresse (beispielsweise eine MAC-Adresse) es die Daten für das zumindest eine Netzwerkgerät im äußeren Netzwerk senden soll. Bei dieser ersten Adresse handelt es sich jedoch noch nicht um die tatsächliche Zieladresse des Netzwerkgerätes 14 in dem äußeren Netzwerk 12, sondern diese erste Adresse (MAC-Adresse) wird durch die Übertragungseinheit 16 definiert und ist unabhängig von der Adresse (insbesondere der MAC-Adresse) des Netzwerkgerätes 14. Damit können zum einen keinerlei Rückschlüsse zwischen den einzelnen Adressen der Netzwerkgeräte in dem inneren und äußeren Netzwerk gezogen werden. Zum anderen kann die Zieladresse des Netzwerkgerätes 14 in dem äußeren Netzwerk 12 in dem inneren Netz nicht bekannt sein, da eine Kommunikation über die Übertragungseinheit 16 von dem äußeren Netzwerk 12 in das innere Netzwerk 13 aufgrund der unidirektionalen Datenübertragung mittels der Datendiode 19 nicht möglich ist.

Über diese beiden vorstehend genannten Schritte lernt somit das Netzwerk, welchen Weg die Daten von der Datenquelle (Netzwerkgerät 15) zu der Übertragungseinheit 16 nehmen sollen.

Ist dies erfolgt, werden in einem weiteren Schritt 3 die Daten von der Datenquelle 15 zu dem Eingang der Übertragungseinheit 16 direkt gesendet. Dabei ist der Vorteil gegeben, dass sie eben direkt gesendet und somit nicht geflutet werden. Dadurch wird die gesamte Performance des Netzwerkes 10 deutlich erhöht.

Nach diesem Vorgang ist in der einen Einheit der Übertragungseinheit 16, nämlich dem Router 17, die Adresse bekannt, nämlich Router 18, mit der die Daten des Netzwerkgerätes 15 übertragen werden sollen. Dies kann in einem weiteren Schritt 4 erfolgen.

In zwei weiteren Schritten (5 und 6) wird durch eine Anfrage der Übertragungseinheit 16 an das Netzwerkgerät 14 diesem mitgeteilt, dass Daten von der Übertragungseinheit 16 ausgesendet und somit von dem Netzwerkgerät 14 empfangen werden sollen. Daraufhin teilt das Netzwerkgerät 14 der Übertragungseinheit 16 seine Adresse, nämlich die zweite Adresse (im Schritt 6) mit, sodass nunmehr die zweite Einheit in der Übertragungseinheit 16, der Router 18, auch die Zieladresse in dem äußeren Netzwerk 12 kennt. Nachdem in dem Router 18 die Adresse, mit der die Daten bis hierhin übertragen worden sind, in die nunmehr konkrete Zieladresse (zweite Adresse) umgewandelt hat, können in einem weiteren Schritt 7 die Daten von dem Ausgang der Übertragungseinheit 16 zu dem zumindest einen Netzwerkgerät 14 in dem äußeren Netzwerk 12 (allgemein zu einem Datenlogger) übertragen werden. Auch hier erfolgt die Übertragung aufgrund der verwendeten Adressen zielgerichtet, sodass ebenfalls eine Datenflutung unterbleibt.

Unter Berücksichtigung der in Figur 2 eingetragenen beispielhaften Adressen wird das Verfahren anhand der in Figur 2 dargestellten Schritte 1 bis 7 im Folgenden noch einmal kurz in anderer Form erläutert.

### Schritt 1, 2:

Über eine ARP response (Schritt 2) lernt die Datenquelle (Netzwerkgerät), an welche MAC-Adresse sie die Daten für die Datensenke (z.B. Datenlogger) senden soll. Diese MAC-Adresse wird durch die Übertragungseinheit definiert (vorgegeben) und ist unabhängig von der MAC-Adresse der Datensenke. Dies erfolgt aus dem Grund, dass die MAC-Adresse der Datensenke am Eingang der Übertragungseinheit nicht vorliegen kann, da es keinerlei Kommunikation vom Ausgang zum Eingang der Übertragungseinheit gibt. Über diese ARP response 2 lernt das Netzwerk somit, welchen Weg die Daten von der Datenquelle zum Eingang der Übertragungseinheit nehmen sollen.

### Schritt 3:

Daten werden von der Datenquelle zum Eingang der Übertragungseinheit direkt gesendet und nicht geflutet.

### Schritt 4:

Der Eingang der Übertragungseinheit kennt die MAC-Adresse, an die er Daten für den Ausgang der Übertragungseinheit senden soll. Dies ist über die Konfiguration der beiden Router in der Übertragungseinheit festgelegt.

Zum Austausch der Ziel-MAC-Adresse werden die Daten in ein IP-Transfer-Netz geroutet. Dies ist über die Konfiguration der beiden Router in der Übertragungseinheit festgelegt. In diesem Schritt erfolgt auch die Datenübertragung in nur einer Richtung. Der Eingang der Übertragungseinheit kann nur Daten an den Ausgang der Übertragungseinheit senden, denn eine Datenübertragung vom Datenausgang zum Dateneingang ist hardwarebedingt nicht möglich.

### Schritt 5, 6:

Über ein ARP response 6 lernt der Ausgang der Übertragungseinheit, an welche MAC-Adresse er letztendlich die Daten für die Datensenke (z.B. Datenlogger) senden soll. Diese MAC-Adresse wird durch die Datensenke definiert und ist unabhängig von der MAC-Adresse, an die die Datenquelle die Daten versendet. Zum Austausch der Ziel-MAC-Adresse werden die Daten zurück in das IP-Netz der Datensenke geroutet. Dies ist über die Konfiguration der Übertragungseinheit, insbesondere der Konfiguration der beiden Router, festgelegt.

Über diese ARP response 6 lernt das Netzwerk, welchen Weg die Daten vom Ausgang der Übertragungseinheit zur Datensenke nehmen sollen.

### Schritt7:

Daten werden vom Ausgang zur Datensenke direkt gesendet und nicht geflutet.

Dies alles hat den Vorteil, dass Daten von der Datenquelle zur Datensenke direkt gesendet (und somit nicht in nachteiliger Weise geflutet) werden, ohne dass die Datenquelle die MAC-Adresse der Datensenke kennt,

Es wird darauf hingewiesen, dass die Bezeichnungen für die Anfragen und die Adressen, wie sie in Figur 2 dargestellt sind, rein beispielhaft und nicht einschränkend sind. Außerdem wird darauf hingewiesen, dass es auch denkbar ist, dass nicht (wie bisher beschrieben) das äußere Netzwerk 12 das sicherheitsunkritische und das innere Netzwerk 13 das sicherheitskritische Netzwerk ist, sondern dass das Verfahren auch umgekehrt betrieben werden kann. Das heißt, dass das Verfahren auch dahingehend betrieben werden kann und die entsprechende Vorrichtung hierfür derart ausgebildet ist, dass eine Datenübertragung von einem sicherheitsunkritischen Netzwerk in ein sicherheitskritisches Netzwerk möglich ist, jedoch eine Datenübertragung von dem sicherheitskritischen Netzwerk in das sicherheitsunkritische Netzwerk zu unterbleiben hat. Außerdem ist das erfindungsgemäße Verfahren und die entsprechende Vorrichtung nicht nur auf die Unterscheidung "sicherheitskritisch" und "sicherheitsunkritisch" eingeschränkt, sondern kann auch allgemein auf Netzwerke angewendet werden, bei denen die Datenübertragung von dem einen in das weitere Netzwerk möglich sein soll, jedoch umgekehrt die Datenübertragung von dem weiteren Netzwerk in das eine Netzwerk unterbunden werden soll. Das bedeutet, dass die miteinander verbundenen Netzwerke sich nicht zwangsläufig durch eine Wertigkeit (sicherheitskritisch/sicherheitsunkritisch) unterscheiden müssen, sondern dass sie auch gleichwertig sind oder sich durch andere Kriterien voneinander unterscheiden können.

Die in Figur 2 dargestellte Übertragungseinheit 16 hat somit die wesentlichen Vorteile, dass sie dazu geeignet und ausgebildet ist, dass die Datenübertragung nur in eine Richtung jederzeit möglich ist, sondern dass auch die Datenübertragung in die entgegengesetzte Richtung verhindert wird. Außerdem ist der Vorteil zu nennen, dass die Netzwerke 12, 13 bzw. deren Netzwerkgeräte 14, 15 eine Übertragungseinheit 16 "sehen" die einer üblichen Übertragungseinheit (insbesondere Router) ohne jeglichen Sicherheitsmechanismus entspricht. Dadurch kann die Übertragungseinheit 16 überall an denjenigen Stellen zwischen Netzwerken eingesetzt werden, die bidirektionale Übertragungsprotokolle verwenden, ohne dass es durch die unidirektionale Übertragungsstrecke zwischen den Netzwerken zu Fehlern bei dem Netzwerkverkehr (Datenaustausch) innerhalb der beiden Netzwerke bei der Anwendung dieser Netzwerkprotokolle kommt. Gleichzeitig wird aber aufgrund des erfindungsgemäßen Verfahrens wirksam sichergestellt, dass einerseits nur eine unidirektionale Datenübertragung gewährleistet und andererseits ein universeller Einsatz gegeben ist.

### Bezugszeichenliste

- 10.: Netzwerk
- 12.: Äußeres Netzwerk
- 13.: Inneres Netzwerk
- 14.: Netzwerkgerät
- 15.: Netzwerkgerät
- 16.: Übertragungsvorrichtung
- 17.: Router
- 18.: Router
- 9.: Datendiode

## Patentansprüche

1. Verfahren zum Betreiben eines Netzwerkes (10), wobei das Netzwerk (10) zumindest ein Netzwerkgerät (14) aufweisendes äußeres Netzwerk (12) und zumindest ein Netzwerkgerät (15) aufweisendes inneres Netzwerk (13) umfasst, wobei weiterhin eine Übertragungseinheit (16) vorhanden ist, die eine Übertragung von Daten von dem äußeren Netzwerk (12) zu dem inneren Netzwerk (13) mittels einer Datendiode (9) blockiert und in die umgekehrte Richtung zulässt, wobei die Übertragungseinheit (16) eine Übertragung von Daten nur von dem inneren Netzwerk (13) zu dem äußeren Netzwerk (12) zulässt und diese Datenübertragung rein physikalisch nur in eine Richtung möglich ist, wobei das zumindest eine Netzwerkgerät (15) aus dem inneren Netzwerk (13) Daten mit einer ersten Adresse an die Übertragungseinheit (16) sendet, wobei die Übertragungseinheit (16) diese erste Adresse in eine zweite Adresse umwandelt und danach die Daten mit dieser zweiten Adresse in Richtung des äußeren Netzwerkes (12) übertragen werden, wobei die zweite Adresse eine Zieladresse für das zumindest eine Netzwerkgerät in dem äußeren Netzwerk (12) ist.

2. Verfahren nach Anspruch 1, wobei das zumindest eine Netzwerkgerät (15) des inneren Netzwerkes (13) eine Anfrage an die Übertragungseinheit (16) sendet, dass Daten gesendet werden sollen, und dass die Übertragungseinheit (16) daraufhin die erste Adresse an das Netzwerkgerät (15) übermittelt.

3. Verfahren nach Anspruch 1 oder 2, wobei das zumindest eine Netzwerkgerät (14) des äußeren Netzwerkes (12) seine Adresse an die Übertragungseinheit (16) übermittelt.

4. Vorrichtung (16) zur Durchführung des Verfahrens nach einem der vorhergehender Ansprüche, wobei die Übertragungseinheit (16) dazu eingerichtet ist, dass die Daten mit der ersten Adresse aus dem inneren Netzwerk (13) von einem ersten Router (17) der Übertragungseinheit (16) empfangen werden, und dass Daten mit der zweiten Adresse an das äußere Netzwerk (12) von einem zweiten Router (18) der Übertragungseinheit (16) gesendet werden, wobei Daten zwischen den Routern (17, 18) rein physikalisch nur in einer Richtung mittels einer Datendiode (9) übertragen werden und die Übertragungseinheit (16) weiterhin dazu eingerichtet ist, die erste Adresse in die zweite Adresse umzusetzen.

5. Vorrichtung nach Anspruch 4, wobei die beiden Router (17, 18) in einem Gerät integriert sind.

## Claims

1. Method for operating a network (10), wherein the network (10) comprises external network (12) having at least one network device (14) and internal network (13) having at least one network device (15), wherein a transmission unit (16) is also provided, which transmission unit blocks transmission of data from the external network (12) to the internal network (13) by means of a data diode (9) and allows it in the opposite direction, wherein the transmission unit (16) allows data to be transmitted only from the internal network (13) to the external network (12) and this transmission of data is purely physically possible only in one direction, wherein the at least one network device (15) from the internal network (13) transmits data with a first address to the transmission unit (16), wherein the transmission unit (16) converts this first address into a second address and the data with this second address are then transmitted in the direction of the external network (12), wherein the second address is a destination address for the at least one network device in the external network (12).

2. Method according to Claim 1, wherein the at least one network device (15) in the internal network (13) transmits a request for data to be transmitted to the transmission unit (16), and in that the transmission unit (16) then transmits the first address to the network device (15).

3. Method according to Claim 1 or 2, wherein the at least one network device (14) in the external network (12) transmits its address to the transmission unit (16).

4. Apparatus (16) for carrying out the method according to one of the preceding claims, wherein the transmission unit (16) is set up such that the data with the first address from the internal network (13) are received by a first router (17) of the transmission unit (16) and data with the second address are transmitted to the external network (12) by a second router (18) of the transmission unit (16), wherein data are purely physically transmitted between the routers (17, 18) only in one direction by means of a data diode (9), and the transmission unit (16) is also set up to convert the first address into the second address.

5. Apparatus according to Claim 4, wherein the two routers (17, 18) are integrated in one device.

## Revendications

1. Procédé de fonctionnement d'un réseau (10), le réseau (10) comprenant réseau externe (12) comportant au moins un équipement de réseau (14) et réseau interne (13) comportant au moins un équipement de réseau (15), en outre une unité de transmission (16) étant présente qui bloque une transmission de données du réseau externe (12) au réseau interne (13) au moyen d'une diode de données (9) et qui l'autorise dans le sens opposé, l'unité de transmission (16) n'autorisant une transmission de données que du réseau interne (13) vers le réseau externe (12) et cette transmission de données n'étant possible de manière purement physique que dans un seul sens, l'au moins un équipement de réseau (15) envoyant des données du réseau interne (13) à l'unité de transmission (16) avec une première adresse, l'unité de transmission (16) convertissant cette première adresse en une deuxième adresse puis les données étant transmises avec cette deuxième adresse en direction du réseau externe (12), la deuxième adresse étant une adresse de destination pour l'au moins un équipement de réseau dans le réseau externe (12).

2. Procédé selon la revendication 1, l'au moins un dispositif de réseau (15) du réseau interne (13) envoyant à l'unité de transmission (16) une requête selon laquelle les données doivent être envoyées, et en ce que l'unité de transmission (16) transmet alors la première adresse à l'équipement de réseau (15).

3. Procédé selon la revendication 1 ou 2, l'au moins un équipement de réseau (14) du réseau externe (12) transmettant son adresse à l'unité de transmission (16) .

4. Dispositif (16) destiné à la mise en œuvre du procédé selon l'une des revendications précédentes, l'unité de transmission (16) étant conçue de sorte que les données ayant la première adresse et provenant du réseau interne (13) soient reçues par un premier routeur (17) de l'unité de transmission (16), et que les données ayant la deuxième adresse soient envoyées au réseau externe (12) par un deuxième routeur (18) de l'unité de transmission (16), les données n'étant transmises de manière purement physique entre les routeurs (17, 18) que dans un sens au moyen d'une diode de données (9) et l'unité de transmission (16) étant en outre conçue pour convertir la première adresse en la deuxième adresse.

5. Dispositif selon la revendication 4, les deux routeurs (17, 18) étant intégrés dans un seul équipement.
